# EUROPEAN PATENT APPLICATION

(11) **EP 2 028 406 A2**
(43) Date of publication of application: **25.02.2009**
(21) Application number: 08103096.7
(22) Date of filing: 28.03.2008
(51) Int. Cl.: F16M 11/08

(54) **Rotation supporting apparatus, assembling method thereof, and monitoring camera having the same**

(30) Priority: 21.08.2007 KR 20070083862
(71) Applicant: Samsung Electronics Co., Ltd., Suwon-si, Gyeonggi-do 442-742 (KR)
(72) Inventor: Lee, Woon-ho 205-1603 Sinyeongtong Hyundai 2nd Apartment, Gyeonggi-do (KR)
(74) Representative: Perkins, Dawn Elizabeth

(57) **Abstract**

A rotation supporting apparatus capable of reducing shaking of a rotating body like a camera unit. The rotation supporting apparatus includes a rotation shaft to be connected with a rotating body and to rotate, two or more bearings to rotatably support the rotation shaft, and a frame comprising a bearing mount part to receive the two or more bearings respectively. The frame includes an inner frame made out of a metal to house therein the bearing mount part, and an outer frame to engage with an outer portion of the inner frame. The rotation supporting apparatus may further include a bearing holder to engage with the rotation shaft and to support the bearings.

## Description

The present invention relates to rotation supporting apparatus, and more particularly, to a rotation supporting apparatus of improved structure for use in a monitoring camera, an assembling method thereof, and a monitoring camera having the same.

A rotation supporting apparatus is applicable to various fields. Basically, a rotation supporting apparatus is employed in a stationary object and provides an increased degree of freedom by enabling the object to rotate. For example, many stationary monitoring cameras are installed in different areas for security purpose, while the same range of area can be covered by a less number of cameras if the cameras are rotatable.

A rotation supporting apparatus that employs a single bearing is generally available. The contact between the rotation supporting apparatus and the bearing usually has a tolerance and this tolerance causes the object to shake in its rotating movement. If a monitor camera shakes, a high quality image cannot be obtained. Furthermore, if the object rotates while shaking for a long period of time, a driving means and a driving force transmitting means are influenced, and thus have deteriorated durability.

The present invention provides an improved rotation supporting apparatus to reduce shaking of a rotating object.

The present invention provides a method of assembling the abovementioned rotation supporting apparatus.

The present invention also provides a monitoring camera employing the abovementioned rotation supporting apparatus, and therefore has increased durability and improved image quality.

Additional aspects and utilities of the present invention will be set forth in part in the description which follows and, in part, will be obvious from the description, or may be learned by practice of the present invention.

The foregoing and/or other aspects and utilities of the present invention may be achieved by providing a rotation supporting apparatus including a rotation shaft to be connected with a rotating body and to rotate, two or more bearings to rotatably support the rotation shaft, and a frame comprising a bearing mount part to receive the two or more bearings respectively.

The frame includes an inner frame made out of a metal to house therein the bearing mount part, and an outer frame to be engaged with an outer portion of the inner frame.

The inner frame is made out of a material that is selected from among aluminum, magnesium, and zinc.

The outer frame is made out of a plastic material.

The rotation shaft includes a hollow structure.

The rotation shaft is made out of a metal.

The metal includes a stainless steel.

The rotation supporting apparatus further includes a bearing holder to be engaged with the rotation shaft and to support the bearings.

The bearing holder includes a piercing hole formed along a radius of the bearing holder, the rotation shaft comprises a hole formed in a location to correspond to the piercing hole, and the bearing holder and the shaft engage with each other by fastening a screw into the piercing hole and the hole.

The rotating body includes a camera unit.

The foregoing and/or other aspects and utilities of the present invention may also be achieved by providing a method of assembling a rotation supporting apparatus, the method including engaging an inner frame fabricated by a die casting process with an outer frame fabricated by plastic injection molding to assemble a frame, assembling two or more bearings in a bearing mount part formed on the frames, assembling a rotation shaft to the two or more bearings, and assembling a bearing holder to the rotation shaft.

The method may further include processing the bearing mount part with precision machining, after the fabrication of the inner frame by die casting.

The foregoing and/or other aspects and utilities of the present invention may also be achieved by providing a monitoring camera including a camera unit comprising a camera lens module, to be rotatable vertically and horizontally, and a rotation supporting apparatus to support the camera unit to rotate horizontally, wherein the rotation supporting apparatus includes a rotation shaft to be connected with the camera unit and to rotate, two or more bearings to rotatably support the rotation shaft, and a frame comprising a bearing mount part to receive the two or more bearings respectively.

The frame includes an inner frame made out of a metal to house therein the bearing mount part, and an outer frame to be engaged with an outer portion of the inner frame.

The inner frame is made out of a material that is selected from among aluminum, magnesium, and zinc.

The outer frame is made out of a plastic material.

The rotation shaft includes a hollow structure.

The rotation shaft is made out of a metal.

The metal includes a stainless steel.

The monitoring camera further includes a bearing holder to be engaged with the rotation shaft and to support the bearings.

The bearing holder comprises a piercing hole formed along a radius of the bearing holder, the rotation shaft comprises a hole formed in a location to correspond to the piercing hole, and the bearing holder an the shaft engage with each other by a screw fastened into the piercing hole and the hole.

The foregoing and/or other aspects and utilities of the present invention may also be achieved by providing a monitoring camera including a camera unit comprising a camera lens module, to be rotatable vertically and horizontally, a rotating plate on which the camera unit and a motor providing a driving force to the camera unit are installed, a rotation shaft to be connected with one end of the rotating plate and to include an opening for a connecting wire, a frame to receive the rotation shaft and to include a gear part on the outer surface, wherein the gear part engages with the motor, two or more bearings to rotatably support the rotation shaft with respect to the frame, and a slip ring assembly to prevent a tangle of the connecting wire.

The frame includes an inner frame made out of a metal to house therein a bearing mount part, and an outer frame to be engaged with an outer portion of the inner frame and to include the gear part.

The inner frame is made out of a material that is selected from among aluminum, magnesium, and zinc.

The outer frame is made out of a plastic material.

The rotation shaft is made out of a stainless steel.

The monitoring camera further includes a bearing holder to be engaged with the rotation shaft and to support the bearings.

The bearing holder comprises a piercing hole formed along a radius of the bearing holder, the rotation shaft comprises a hole formed in a location to correspond to the piercing hole, and the bearing holder an the shaft are engaged with each other by a screw fastened into the piercing hole and the hole.

The slip ring assembly includes a slip ring to hold the connecting wire, and a slip ring holder to receive and support the slip ring and to be engaged with the frame.

The foregoing and/or other aspects and utilities of the present invention may also be achieved by providing a monitoring camera, including a camera unit including a camera lens module rotatable vertically with respect to the camera unit and a base including a motor thereon to rotate the camera unit horizontally; a rotation shaft to connect at one end with a bottom portion of the camera unit base and including an opening therethrough to receive a connecting wire; a frame assembly to receive the rotation shaft therethrough and including a gear part on an outer surface thereof to engage with the motor; a bearing assembly disposed between the frame assembly and the rotation shaft at two or more locations to rotatably support the frame with respect to the rotation shaft; and a slip ring assembly disposed at another end of the rotation shaft to prevent twisting of the connecting wire extending through the rotation shaft.

The bearing assembly can include a first bearing disposed between a top portion of the frame assembly and the rotation shaft and a second bearing disposed between a bottom portion of the frame assembly and the rotation shaft.

The frame assembly can include an inner frame part having the rotation shaft extending therethrough and an outer frame disposed axially over the inner frame and including the gear part axially disposed thereon.

The bearing assembly can include a first bearing disposed between the inner frame part and the rotation shaft, a second bearing disposed between the outer frame part and the rotation shaft, and a bearing holder disposed at one side of the second bearing and connected to the one end of the rotation shaft adjacent to the camera unit base.

The monitoring camera can also include a power unit to support the slip ring assembly and to receive and supply power to one end of the connecting wire.

These and/or other aspects and utilities of the present invention will become apparent and more readily appreciated from the following description of the embodiments, taken in conjunction with the accompanying drawings of which:
FIG. 1 illustrates a monitoring camera employing a rotation supporting apparatus according to an example embodiment of the present invention; FIG. 2 is an exploded perspective view of the monitoring camera illustrated in FIG. 1;
FIG. 3 is an exploded perspective view illustrating a rotation supporting apparatus, a slip ring, and a slip ring holder according to an example embodiment of the present invention; and
FIG. 4 is a cross-section view of the rotation supporting apparatus, the slip ring, and the slip ring holder of FIG. 3.

Reference will now be made in detail to the embodiments of the present invention, examples of which are illustrated in the accompanying drawings, wherein like reference numerals refer to the like elements throughout. The embodiments are described below in order to explain the present invention by referring to the figures.

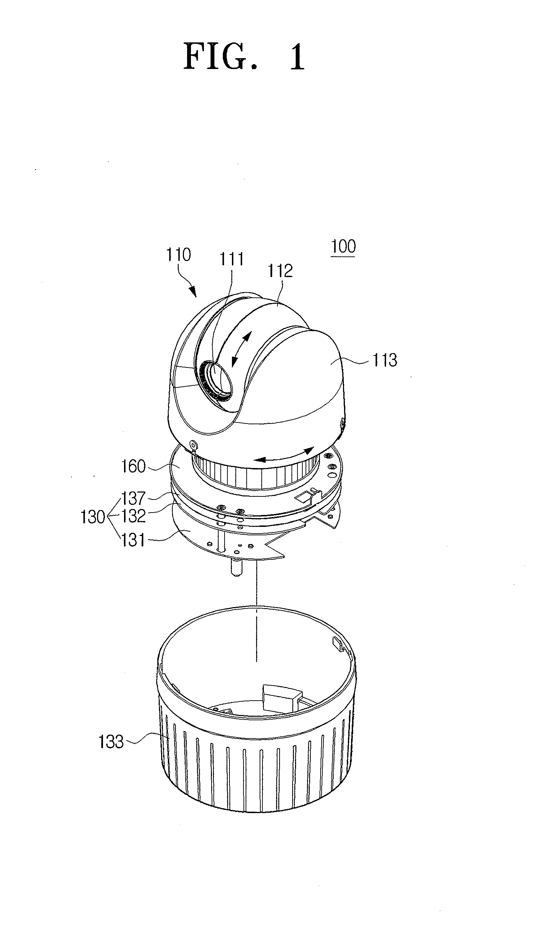

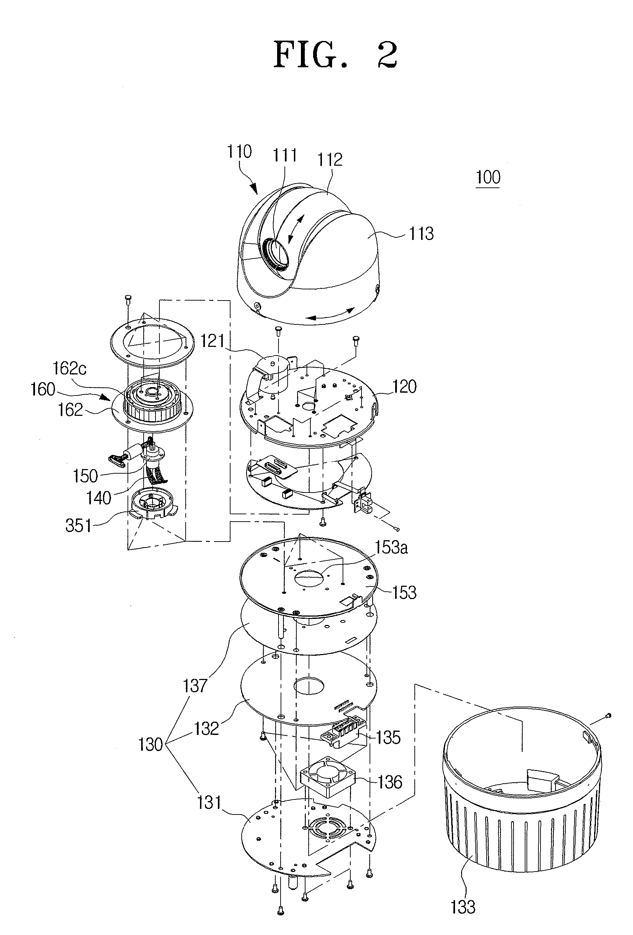

FIG. 1 illustrates a monitoring camera employing a rotation supporting apparatus according to an example embodiment of the present invention, and FIG. 2 is an exploded perspective view of the monitoring camera illustrated in FIG. 1. Herein, a detailed description of any well known function or structure will be omitted where this could obscure the scope of the present invention. Also, one should understand that the embodiments set forth below should be referred to only as the exemplary embodiments of the present invention and that these should not be considered to be limiting.

The monitoring camera 100 according to an example embodiment of the present invention includes a camera unit 110, a rotating plate 120, a power unit 130, a connecting wire 140, a slip ring 150, and a rotation supporting apparatus 160.

The camera unit 110 operates to photograph objects in a given area, and includes a camera lens module 111, a first housing 112, and a second housing 113.

The camera lens module 111 operates to acquire an optical image of the given area through a lens, and to convert the image into an electric signal. The first housing 112 houses therein the camera lens module 111 movably so that the camera lens module 111 rotates vertically. The second housing 113 houses therein the first housing 112, and is rotatable horizontally.

The rotating plate 120 engages with the second housing 113 of the camera unit 110 to rotatably support the camera unit 110. A motor 121 is formed on the rotating plate 120 to provide a driving force to rotate the camera unit 110.

The power unit 130 supplies a voltage, which is transformed through an external power unit (not illustrated), to the motor housed in the camera unit 110. The power unit 130 includes a bottom plate 131, a power circuit board 132, and an insulating layer 137. The bottom plate 131 is disposed on an inner bottom of a casing body 133. The power circuit board 132 is formed on an upper portion of the bottom plate 131. Disposed on the power circuit board 132 is a power socket 135 to be connected with an external power socket (not illustrated). On the bottom plate 131 is formed a heat dissipating fan 136 to discharge heat from the power circuit board 132 during operation. The insulating layer 137 is placed on the power circuit board 132 for insulating purpose.

The connecting wire 140 electrically connects the power unit 130 with the camera unit 110. Through the connecting wire 140, electricity to drive the camera unit 110 and signal to control the camera unit 110 are transmitted and received. Because the camera unit 110 rotates, the connecting wire 140 including multiple wires may be tangled with each other while the camera unit 110 rotates.

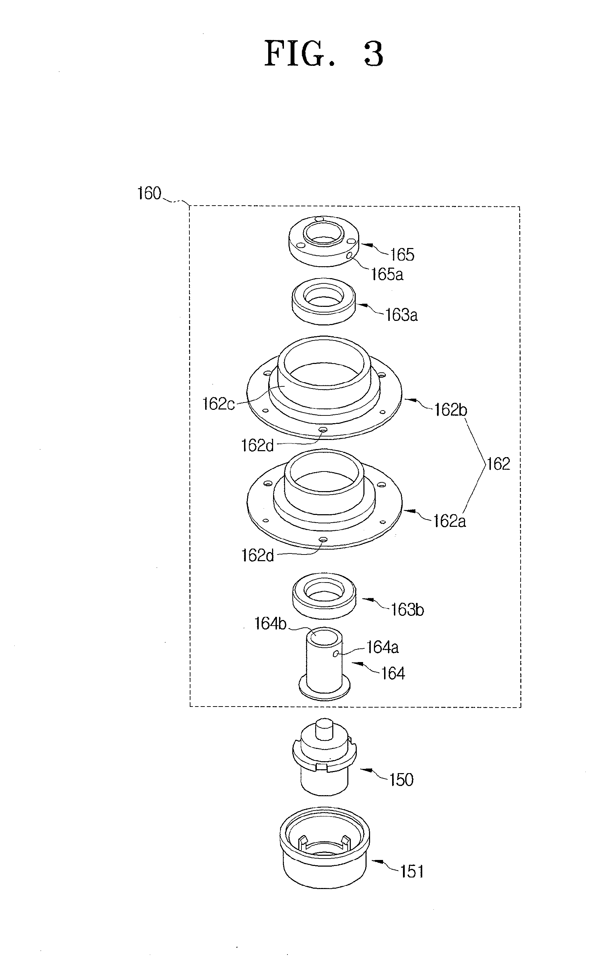

The slip ring 150 prevents such tangle of the connecting wire 140. The slip ring 150 is fit in a slip ring holder 151 (refer to FIG. 3). The slip ring holder 151, supporting the slip ring 150 therein, then engages with a lower potion of the rotation supporting apparatus 160.

An intermediate plate 153 is disposed on the insulating layer 137, and fixed to the power unit 130. The intermediate plate 153 includes a hole 153a for the slip ring 150 and the connecting wire 140 to pass therethrough. A lower portion of the rotation supporting apparatus 160 is fastened to the intermediate plate 153.

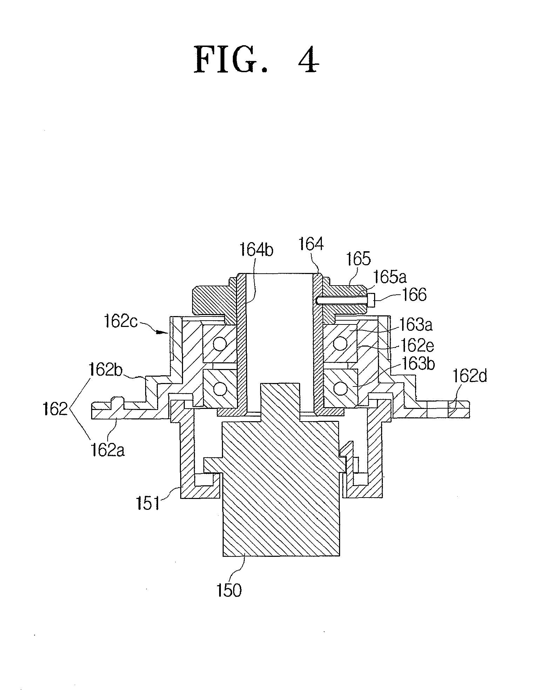

FIG. 3 illustrates the structure of the rotation supporting apparatus 160, the slip ring 150, and the slip ring holder 151 in detail, and FIG. 4 is a cross-section view of the rotation supporting apparatus 160, the slip ring 150, and the slip ring holder 151.

The rotation supporting apparatus 160 includes a frame 162, a bearing 163, a rotation shaft 164, and a bearing holder 165. The rotation supporting apparatus 160 is positioned between the camera unit 110 and the power unit 130, to rotatably support the rotating plate 120. The connecting wire 140 passes through the rotation supporting apparatus 160.

The frame 162 is fixed on the intermediate plate 153. Conventionally, the frame 162 is made of a single material using a single processing method. For example, the frame 162 for a monitoring camera is generally fabricated by injection molding a plastic material. However, this would not have a precise surface of the frame that contacts the bearing 163. Accordingly, a considerably wide tolerance may be created when the frame 162 and the bearing 163 are assembled with each other. If such tolerance is created, the rotating plate 120 shakes while rotating, and this causes deteriorated image quality and durability.

According to an example embodiment of the present invention, the frame 162 includes an inner frame 162a and an outer frame 162b separately. The inner and outer frames 162a and 162b are made out of different materials than the conventional frame, and through different processing methods than the conventional frame.

The inner frame 162a contacts an outer race of the bearing 163, and supports the bearing 163. By processing the inner frame 162a precisely, tolerance with the bearing 163 can be reduced and the potential problem of the rotating plate 120 shaking can be avoided. Therefore, it is preferable that the inner frame 162a is made by die casting which provides accurate precision, and made out of metal such as aluminum, magnesium, or zinc. It is more preferable that the inner frame 162a is made by die casting, and then goes through another precision machining for the inner surface of the inner frame 162a that contacts the bearing 163 so as to have lower tolerance with the bearing 163 and increased concentricity.

The outer frame 162b may be made by the generally known method as this does not require accurate tolerance. In an example embodiment of the present invention, the frames not only support the bearing 163, but also play a role as a gear part to transmit a rotational force. The outer frame 162b has a gear part 162c formed on the outer surface thereof. The gear part 162c engages with a pinion gear (not illustrated) which engages with a shaft of the motor 121 formed on the rotating plate 120. Accordingly, driving force from the motor 121 allows the rotating plate 120 and the camera unit 110 engaged with the rotating plate 120 to rotate.

The contact parts of the inner frame 162a and the outer frame 162b have the same configuration and so are engageable with each other. Both the inner and outer frames 162a and 162b have a flange part. The flange parts each include an engagement hole 162d formed in corresponding locations. Accordingly, the inner and outer frames 162a and 162b are fastened to the intermediate plate 153 by fasteners such as a screw that passes through the engagement holes 162d.

The bearing 163 is seated on a bearing mount part 162e (refer to FIG. 4) of the inner frame 162a. The inner race of the bearing 163 contacts the rotation shaft 164. Two or more bearings 163 may desirably be used according to the example embodiment of the present invention, because one bearing 163 may not be enough to prevent the tolerance between the neighboring components and subsequent shaking of the rotating plate 120. By employing two or more bearings 163, tolerance or influence by the tolerance can be reduced, and the problem of the rotating plate 120 shaking can be avoided. The example embodiment described here employs two bearings 163, including an upper bearing 163a disposed at the upper portion of the inner frame 162a, and a lower bearing 163b disposed at a lower portion of the bearing 163a.

The rotation shaft 164 contacts the inner race of each of the bearings 163a and 163b. By fabricating the rotation shaft 164 with accurate precision, tolerance between the rotation shaft 164 and each of the bearings 163a and 163b can be reduced, and the problem of the rotating plate 120 shaking can be prevented. The rotation shaft 164 may be made out of stainless steel or other metals. The rotation shaft 164 includes a hole 164a to receive the bearing holder 165. The rotation shaft 164 also includes an opening 164b to allow the connecting wire 140 to pass through to connect the power unit 130 and the camera unit 110.

The bearing holder 165 is formed on the other end of the rotation shaft 164, and supports the upper bearing 163a. The rotation shaft 164 is fit into the bearing holder 165. The bearing holder 165 includes a piercing hole 165a formed at a location to correspond to the hole 164a of the rotation shaft 164. The bearing holder 165 engages with the rotation shaft 164 using a screw that passes through the piercing hole 165a and the hole 164a. The screw may be a set-screw 166 as illustrated in FIG. 4.

The rotation supporting apparatus 160 is assembled as follows.

An inner frame 162a is fabricated by a die casting process. A surface of the inner frame 162a that contacts the bearing 163 is processed by precision machining to further reduce tolerance with the bearing.

The inner frame 162a engages with the outer frame 162b, which may be fabricated in a known manner, to form a frame 162. An upper bearing 163a is fit in a bearing mount part 162e of the inner frame 162a downwardly from the upper direction. A lower bearing 163b is then assembled into the bearing mount part 162e of the inner frame 162a upwardly from the lower direction. A rotation shaft 164 is pierced to assemble from the direction of the lower bearing 163b to the upper bearing 163a. A bearing holder 165 is assembled to the upper portion of the rotation shaft 164. A piercing hole 165a and a hole 164a are aligned with each other, and the bearing holder 165 and the rotation shaft 164 are engaged with each other by the set screw 166. As a result, the rotation supporting apparatus 160 is completed.

When the rotation supporting apparatus 160 is completed, a slip ring 150 is inserted in a slip ring holder 151. The structure of the slip ring 150 engaged with the slip ring holder 151 is then engaged with the lower portion of the rotation supporting apparatus 160. The rotation supporting apparatus 160 is fastened to the intermediate plate 153 by the screw that passes through the engagement hole 162d of the frame 162.

The bearing holder 165 engages with the rotating plate 120. According to the rotation of the rotating plate 120, the bearing holder 165 and the rotation shaft 164 are rotated together. Accordingly, the rotating plate 120 is rotated without shaking.

As explained above in the example embodiments of the present invention, tolerance of the rotation supporting apparatus is controlled and the potential problem of the rotating body shaking can be avoided. As a result, degradation of image quality is prevented, guaranteeing good performance of the apparatus such as a monitoring camera that employs the apparatus.

Furthermore, abnormal load on a gear as the rotation force transmitting means is prevented, and wearing out of gear teeth is also restrained. As a result, durability increases.

Furthermore, a compacter monitoring camera can be provided, as a gear part to transmit rotational force of the camera unit and a rotation supporting apparatus to support the rotation of the camera unit are integrated with each other.

Although a few embodiments of the present invention have been illustrated and described, it will be appreciated by those skilled in the art that changes may be made in these embodiments without departing from the scope of the invention as defined in the appended claims.

## Claims

1. A rotation supporting apparatus, comprising:
a rotation shaft (164) to connect with a rotating body and to rotate;
two or more bearings (163a, 163b) rotatably supporting the rotation shaft (164); and
a frame (162) comprising a bearing mount part (162e) configured to receive the two or more bearings (163a, 163b) respectively.

2. The rotation supporting apparatus of claim 1, wherein the frame (162) comprises:
an inner frame (162a) made out of a metal housing therein the bearing mount part (162e); and
an outer frame (162b) configured to engage with an outer portion of the inner frame (162a).

3. The rotation supporting apparatus of claim 2, wherein the inner frame (162a) is made out of a material that is selected from among aluminum, magnesium, and zinc.

4. The rotation supporting apparatus of claim 2 or 3, wherein the outer frame (162b) is made out of a plastic material.

5. The rotation supporting apparatus of any one of preceding claims, wherein the rotation shaft (164) comprises a hollow structure.

6. The rotation supporting apparatus of any one of the preceding claims,
wherein the rotation shaft (164) is made out of a metal.

7. The rotation supporting apparatus of claim 6, wherein the metal comprises a stainless steel.

8. The rotation supporting apparatus of any one of the preceding claims, further comprising:
a bearing holder (165) configured to engage with the rotation shaft (164) and to support the bearings (163a, 163b).

9. The rotation supporting apparatus of claim 8, wherein:
the bearing holder (165) comprises a piercing hole (165a) formed along a radius thereof,
the rotation shaft (164) comprises a hole formed in a location to correspond with the piercing hole (165a), and
the bearing holder (165) and the shaft (164) engage with each other by a screw (166) fastened into the piercing hole (165a) and the hole.

10. The rotation supporting apparatus of any one of the preceding claims,
wherein the rotating body comprises a camera unit (110).

11. A monitoring camera, comprising:
a camera unit (110) comprising a camera lens module (111), configured to be rotatable vertically and horizontally; and
a rotation supporting apparatus according to any one of the preceding claims
wherein the rotating body is the camera unit, wherein the rotation supporting apparatus supports the camera unit (110) to rotate horizontally.

12. The monitoring camera of claim 11,
wherein the rotating body further comprises a rotating plate (120) on which the camera unit (110) and a motor (121) providing a driving force to the camera unit (110) are installed;
wherein the rotation shaft (164) is connected with one end of the rotating plate (120) and includes an opening to receive a connecting wire (140);
wherein the frame (162) receives the rotation shaft (164) and includes a gear part (162c) on the outer surface, wherein the gear part (162c) engages with the motor (121); and
wherein the monitoring camera further comprises a slip ring assembly (150, 151) to prevent a tangle of the connecting wire (140).

13. The monitoring camera of claim 12, wherein the slip ring assembly comprises:
a slip ring (150) configured to hold the connecting wire (140); and
a slip ring holder (151) configured to receive and support the slip ring (150) and to engage with the frame (162).

14. A monitoring camera, comprising:
a camera unit including a camera lens module rotatable vertically with respect to the camera unit and a base including a motor thereon to rotate the camera unit horizontally;
a rotation shaft to connect at one end with a bottom portion of the camera unit base and including an opening therethrough to receive a connecting wire;
a frame assembly to receive the rotation shaft therethrough and including a gear part on an outer surface thereof to engage with the motor;
a bearing assembly disposed between the frame assembly and the rotation shaft at two or more locations to rotatably support the frame with respect to the rotation shaft; and
a slip ring assembly disposed at another end of the rotation shaft to prevent twisting of the connecting wire extending through the rotation shaft.

15. The monitoring camera of claim 14, wherein the bearing assembly comprises:
a first bearing disposed between a top portion of the frame assembly and the rotation shaft; and
a second bearing disposed between a bottom portion of the frame assembly and the rotation shaft.

16. The monitoring camera of claim 14 or 15, wherein the frame assembly comprises:
an inner frame part having the rotation shaft extending therethrough; and
an outer frame disposed axially over the inner frame and including the gear part axially disposed thereon.

17. The monitoring camera of claim 16, wherein the bearing assembly comprises:
a first bearing disposed between the inner frame part and the rotation shaft;
a second bearing disposed between the inner frame part and the rotation shaft; and
a bearing holder disposed at one side of the second bearing and connected to the one end of the rotation shaft adjacent to the camera unit base.

18. The monitoring camera of any one of claims 14 to 17, further comprising:
a power unit to support the slip ring assembly and to receive and supply power to one end of the connecting wire.

19. A method of assembling a rotation supporting apparatus, the method comprising:
engaging an inner frame (162a) fabricated by a die casting process with an outer frame (162b) fabricated by a plastic injection molding process to assemble a frame (162);
assembling two or more bearings (163a, 163b) in a bearing mount part (162e) formed on the frames;
assembling a rotation shaft (164) to the two or more bearings (163a, 163b); and
assembling a bearing holder (165) to the rotation shaft.

20. The method of claim 19, further comprising:
processing the bearing mount part (162e) with precision machining, after the fabrication of the inner frame (162a) by die casting.
